# FASCICULE DE BREVET EUROPEEN

(11) **EP 2 161 545 B1**
(45) Date de publication et mention de la délivrance du brevet: **26.10.2011**
(21) Numéro de dépôt: 09167718.7
(22) Date de dépôt: 12.08.2009
(51) Int. Cl.: G08G 5/00

(54) **Dispositif de visualisation pour aéronef comprenant des moyens d'affichage d'aéronefs présentant un risque de collision**
Anzeigevorrichtung für ein Flugzeug mit Flugzeug-Anzeigemitteln zur Darstellung eines Kollisionsrisikos
Display device for an aircraft including display means for representing a collision risk

(30) Priorité: 09.09.2008 FR 0804947
(43) Date de publication de la demande: 10.03.2010
(73) Titulaire: Thales, 92200 Neuilly Sur Seine (FR)
(72) Inventeur: Nouvel, Christian, 33700 Mérignac (FR); Bacabara, Corinne, 31770 Colomiers (FR); Perbet, Jean-Noël, 33320 Eysines (FR)
(74) Mandataire: Bréda, Jean-Marc

(56) Documents cités:
- WO-A-2007/002917
- US-A- 5 313 201

## Description

Le domaine général de l'invention est celui des systèmes anti-collision pour aéronef et plus particulièrement celui de la présentation des informations d'anti-collision.

Pour un aéronef en vol, il est fondamental de connaître très précisément les aéronefs situés dans son environnement immédiat afin d'éviter tout risque de collision. Ce problème est particulièrement crucial dans un certain nombre d'applications où les aéronefs sont amenés à voler à basse altitude avec des conditions de visibilité qui peuvent être réduites. Historiquement, dès les années 1960-1970, une solution indépendante du contrôle de trafic aérien ou «Air Traffic Control» s'est progressivement dégagée. Cette solution est connue sous le nom de TCAS, acronyme de « Traffic alert and Collision Avoidance System ».

Aujourd'hui, plusieurs familles de TCAS ont été développées et sont utilisées:
- La première génération dite TCAS I fournit uniquement des alertes de type « Traffic Advisory » ou TA de proximité d'intrus, mobiles ou aéronefs présentant un risque pour l'aéronef. Le TCAS I est essentiellement utilisé dans l'aviation générale, c'est à dire le domaine des petits avions.
- Le TCAS **Il** fournit d'une part des alertes de type TA de proximité d'intrus et d'autre part des résolutions de conflits en proposant au pilote des manoeuvres d'évitement. Le mode de fonctionnement se nomme RA pour « Resolution Advisory ». Ces manoeuvres d'évitement s'effectuent dans un plan vertical par une montée ou une descente de l'appareil. Il est essentiellement utilisé dans l'aviation commerciale. Le TCAS II a été rendu obligatoire dans les années 1990 sur tous les avions de ligne.
- Le TCAS III, encore en développement, est une amélioration du TCAS II permettant en plus une résolution des conflits en mode RA dans le plan horizontal par des manoeuvres de virage à gauche ou à droite.

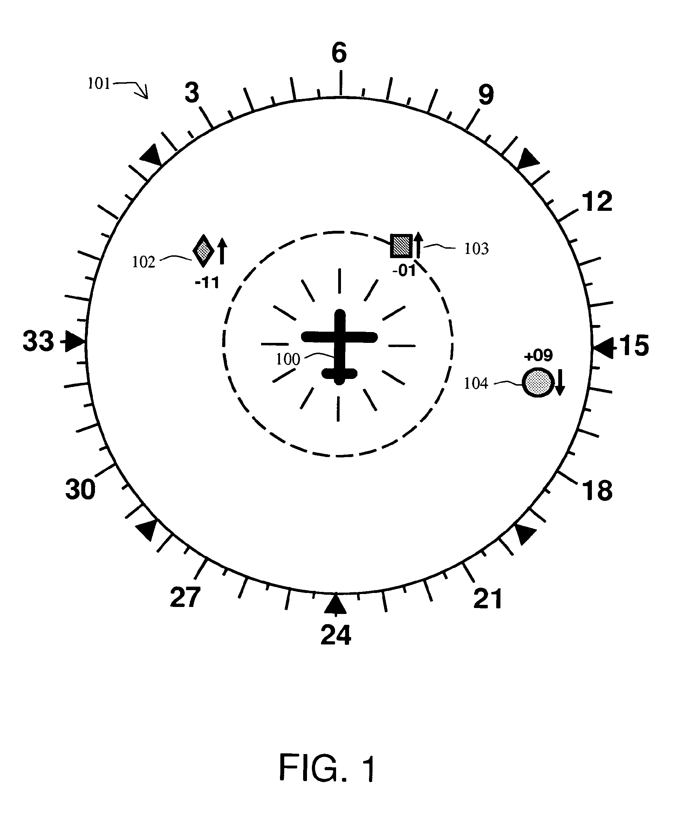

La présentation des informations TCAS au pilote peut se faire de différentes manières. A titre d'exemple, la figure 1 montre la présentation des intrus sur un écran de type ND (Navigation Display). La présentation des intrus s'effectue dans un plan horizontal 2D relativement à l'aéronef 100 en mode dit « ROSE » pour rose des caps. L'aéronef 100 occupe le centre de la « ROSE » 101 représentée par un cercle gradué. La forme et la couleur des intrus sont différentes selon leur degré de danger associé et selon le mode de fonctionnement du TCAS.

A titre d'exemples, l'aéronef 102 est proche, à une altitude relative de 1100 pieds sous l'aéronef 100, altitude relative symbolisée par l'indication « -11 ». Cet aéronef est en montée, symbolisé par une flèche montante sur la figure 1. Il est figuré par un losange plein de couleur blanche ou cyan représentant une menace en mode dit PT pour « Proximate Traffic ». Selon les conventions aéronautiques, lorsque le losange est plein, la menace est de type PT, si le losange est vide, alors la menace est de type OT, signifiant « Other Traffic ».

L'aéronef 103 est une menace en mode RA pour « Resolution Advisory ». Il est situé à une altitude relative de 100 pieds sous l'aéronef 100 et en montée. La couleur du carré qui le représente est le rouge.

L'aéronef 104 est un intrus en mode TA pour « Traffic Advisory », il est 900 pieds au-dessus de l'aéronef 100 et en descente. La couleur du cercle qui le représente est l'ambre.

Comme on peut le voir, l'interprétation des informations par le pilote est loin d'être immédiate, ce qui peut se révéler particulièrement dangereux en cas de risque de collision imminent.

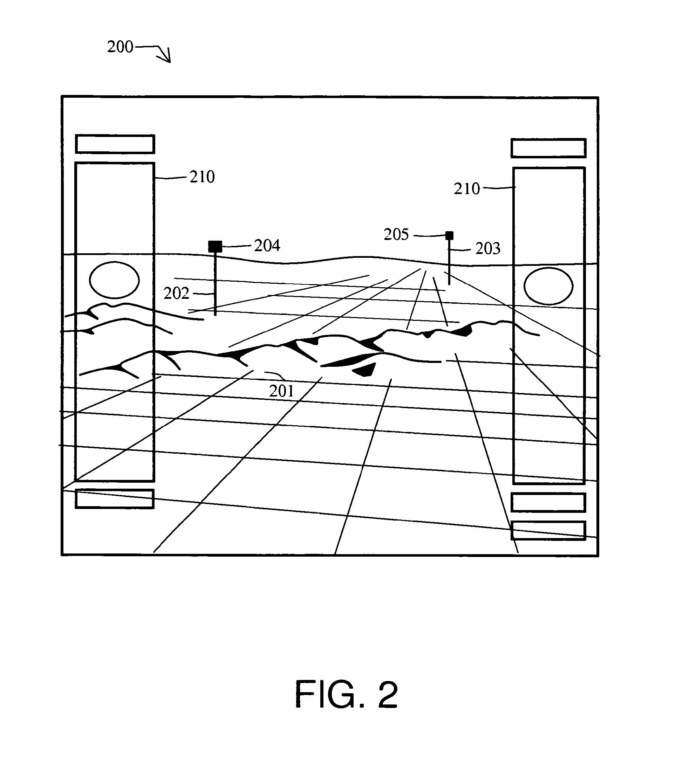

Les nouveaux systèmes de vision synthétique de type SVS (Synthetic Vision Systems) permettent actuellement aux pilotes d'avoir une représentation synthétique du monde extérieur et donc, une meilleure conscience des dangers environnants tels que les collisions avec le sol sans perte de contrôle communément appelées CFIT (Controlled Flight Into Terrain). Ces systèmes SVS permettent actuellement d'afficher en 3D un terrain synthétique ainsi que les obstacles naturels ou artificiels (immeubles...). Une amélioration de la présentation des informations fournies par le TCAS, a été proposée dans la demande de brevet d'Honeywell intitulé «Perspective View Conformal Traffic Target Display» publié sous le numéro international W02007/002917A1. La figure 2 montre un exemple de présentation des intrus sur un écran 200 de type PFD pour « Primary Flight Display » selon les dispositions de cette demande. La présentation des intrus s'effectue en 3D de manière conforme, c'est à dire positionnés à leur emplacement réel dans le paysage. Des informations complémentaires sont associées aux intrus pour aider le pilote à situer leur position, au-dessus ou en dessous d'une altitude de référence et leur degré d'éloignement obtenu grâce à une variation de dimension des symboles. La figure 2 présente, dans une vue synthétique conforme 3D du terrain 201, le trafic aérien. Cette vue comporte également une représentation 210 des informations du PFD. Les intrus sont présentés dans le secteur frontal de l'avion. Les intrus 204 et 205 sont représentés par des carrés plus ou moins grands selon leur distance relative à l'avion. D'autres symboles sont ajoutés pour aider le pilote à interpréter l'altitude relative de l'intrus par rapport à l'avion. Ainsi, les symboles 202 et 203 représentants des mâts verticaux donnent la position et la hauteur des intrus au-dessus du sol. Cette présentation est bien adaptée aux avions de ligne qui volent relativement à haute altitude.

Bien que les nouveaux systèmes SVS permettent de mieux faire comprendre au pilote, la situation des intrus, en particulier leur type, leur positionnement, leur comportement, leurs performances..., ces nouveaux systèmes sont insuffisants pour accomplir des missions à basse altitude.

En effet, les intrus sont très rares pour les avions de lignes en vol aux instruments, qui suivent des plans de vols préétablis dans des couloirs aériens stricts et sont contrôlés depuis le sol avec des radars par les organismes de la circulation aérienne. Par contre, des hélicoptères ou des petits avions peuvent voler en nombre en basse altitude, par exemple, pour participer à un sauvetage d'un grand nombre de victimes, dans le cadre d'un plan « rouge » ou dans le cadre de missions de prévention civile.

Dans ce cas, le vol est essentiellement à vue, sans plan de vol établi et/ou hors d'une couverture radar classique. Les conditions de visibilité peuvent se dégrader en cas de vol de nuit, de soleil de face, de présence de fumée pour des missions incendie,.... Les aéronefs ont aussi des trajectoires plus dynamiques et plus variées (mises en virage, montées, descentes,...) que celles des avions de ligne. Dans ces conditions, il est particulièrement important de bien faire comprendre au pilote où sont les intrus par rapport à lui et essentiellement leurs performances telles, par exemple, leur vitesse de rapprochement ou leur degré de dangerosité.

Le but de l'invention est donc de présenter l'ensemble des menaces se trouvant dans le secteur frontal d'un aéronef de la façon la plus intuitive possible afin de les rendre immédiatement intelligibles au pilote.

Plus précisément, l'invention a pour objet un système de visualisation de type à vision synthétique (SVS), pour un premier aéronef, ledit système comprenant au moins une base de données cartographiques d'un terrain, des capteurs de position dudit aéronef, un système de détection du trafic aérien calculant la position et la dangerosité d'au moins un second aéronef présentant un risque de collision avec ledit premier aéronef à partir de données issues de capteurs de reconnaissance, un calculateur électronique, un moyen d'interface homme-machine et un écran d'affichage, le calculateur comprenant des moyens de traitement des différentes informations issues de la base de données, des capteurs et du moyen d'interface, lesdits moyens de traitement agencés de façon à fournir à l'écran d'affichage une image synthétique du terrain comportant une représentation dudit second aéronef, caractérisé en ce que ladite représentation comprend un premier symbole représentant de façon stylisé ledit second aéronef et un second symbole, situé à droite du premier symbole lorsque le second aéronef est face au premier aéronef et situé à gauche du premier symbole lorsque le second aéronef est dos au premier aéronef ou inversement.

Avantageusement, la représentation du second aéronef comporte un troisième symbole différent du premier symbole par sa forme ou par sa couleur et disposé symétriquement du second symbole, de façon que lorsque le second symbole est à droite du premier symbole, le troisième symbole est à gauche du premier symbole et inversement. De plus, le premier symbole comporte un segment horizontal et un quatrième symbole représentatif de la trajectoire du second aéronef.

Préférentiellement, le premier symbole est un triangle isocèle à base horizontale et le second et troisième symbole sont des cercles de couleur différente, disposés aux deux extrémités de la base dudit triangle. De plus, lorsque le second aéronef descend, alors la pointe du triangle est dirigée vers le bas et lorsque le second aéronef monte, alors la pointe du triangle est dirigée vers le haut ; lorsque le second aéronef descend, alors le triangle a une première texture ou une première couleur et lorsque le second aéronef monte, alors le triangle a une seconde texture différente de la première texture ou une seconde couleur différente de la première couleur ; la hauteur du triangle est proportionnelle à la vitesse de montée ou de descente du second aéronef, le triangle se réduisant à un simple segment lorsque le second aéronef est en pallier.

Avantageusement, le second symbole est de couleur rouge et le troisième symbole de couleur verte représentatifs des feux de position du second aéronef ; lorsque le second aéronef est à une distance du premier aéronef inférieure à une distance de sécurité, les second et troisième symboles clignotent.

Enfin, le premier, second et troisième symbole peuvent être représentés en vue conforme, c'est-à-dire à l'emplacement qu'ils occupent dans le paysage réel et peuvent avoir une taille fixe sur l'écran d'affichage.

L'invention sera mieux comprise et d'autres avantages apparaîtront à la lecture de la description qui va suivre donnée à titre non limitatif et grâce aux figures annexées parmi lesquelles :
La figure 1 représente une première présentation des informations de type TCAS selon l'art antérieur ;
La figure 2 représente une seconde présentation des informations de type TCAS selon l'art antérieur ;
La figure 3 représente le diagramme d'un système de visualisation selon l'invention ;
La figure 4 représente une vue d'ensemble d'un affichage de type TCAS selon l'invention ;
La figure 5 représente différentes représentations des aéronefs présents dans l'affichage selon leur position et leur attitude.

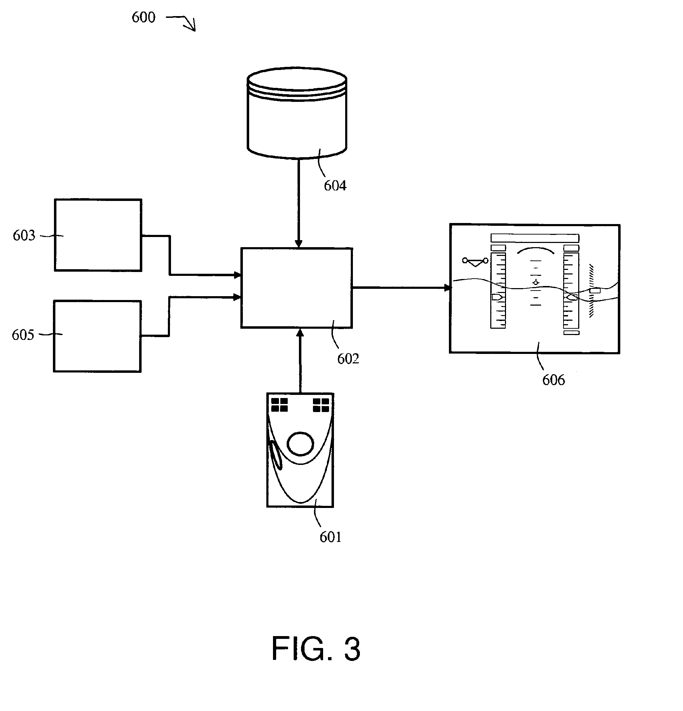

La figure 3 représente un exemple d'architecture du système, objet de l'invention.

Cet exemple de système d'affichage graphique 600 regroupe un processeur 602 configuré pour fournir à l'écran 606 les informations à afficher. Une ou plusieurs sources de données sont reliées au processeur 602. Ces sources de données incluent une base de données cartographiques 604 du terrain utilisée pour le tracé de la vue en perspective, des capteurs de positionnement 603 de l'avion, un système de détection du trafic aérien 605, permettant la détection d'intrus et des moyens de commande et de contrôle 601 pour la présentation des informations au pilote.

Ces bases de données sont généralement positionnées dans l'aéronef. Les données peuvent également provenir du sol par des moyens de transmission dits « data link ». De plus, ces données peuvent être stockées sur différents périphériques tels que des disquettes, des disques durs, des CD-ROM, des mémoires volatiles, des mémoires non volatiles, des RAM ou tous autres moyens permettant le stockage de données.

Le système d'affichage comprend également des moyens d'interface homme machine et de contrôle 601. Ces moyens sont, par exemple, comme représenté sur la figure 3, des CCD pour « Cursor Control Device », moyens proches des « souris » informatiques. Ils peuvent également être des postes de commande classiques, la commande étant effectuée grâce à des boutons, des surfaces tactiles,....

Le processeur 602 est interfacé avec des composants hardware qui fournissent un rendu graphique. Par exemple, ces composants hardware sont un ou plusieurs microprocesseurs, des mémoires, des appareils de stockage, des cartes d'interfaces ou tous autres composants standards. De plus, le processeur 602 fonctionne avec des logiciels ou « software » ou des micro-logiciels ou « firmware ». Il est capable de lire des instructions machine pour réaliser diverses tâches, calculs et fonctions de contrôle et générer les signaux à afficher et les autres données utilisés par l'écran d'affichage. Ces instructions peuvent être stockées sur des disquettes, des disques durs, des CD-ROM, des mémoires volatiles, des mémoires non volatiles, des RAM ou tous autres moyens permettant le stockage de données. Tous ces moyens sont connus de l'homme du métier.

Le processeur 602 fournit les données à afficher aux écrans d'affichage 606. Ces données comprennent :
- La position en latitude/longitude, la vitesse, le cap, ...de l'aéronef à partir de la localisation courante de l'aéronef issue des capteurs de position 603 ;
- Les bases de données cartographiques du terrain 604 ;
- La position relative des intrus fournie par les systèmes de détection du trafic 605 ;

Le processeur 602 est configuré pour recevoir et calculer les données avion à savoir la localisation courante de l'aéronef issue des capteurs de position 603 qui peuvent être une centrale à inertie, un système de type GPS pour « Global Positioning System », ....

Basé sur les données de position, le processeur 602 obtient les données concernant le terrain à partir de la base de données terrain 604. Il les envoie aux écrans d'affichage 606 pour représenter une image synthétique.

Les capteurs d'intrus 605 sont constitués par au moins un système TCAS. Ils peuvent être également des systèmes de type ADS-B pour « Automatic Dependent Surveillance Broadcast » ou TIS-B pour « Traffic Information Service Broadcast ». Optionnellement, les données peuvent être fournies par une liaison numérique de type « Datalink ». Ces systèmes de détection de trafic peuvent fournir la position des intrus, les types des intrus (hélicoptères, avions, autres), leur vitesse,....

Le processeur 602 est configuré pour recevoir les informations, vérifier leur cohérence, mémoriser de façon historique, par exemple, au moins les cinq dernières positions de chaque intrus, par exemple dans une file d'attente circulaire datée et prédire la trajectoire future sur un délai court. Le nombre de valeurs mémorisées est paramétrable.

Les intrus visibles dans le secteur frontal sont présentés en vue conforme 3D sur un écran de pilotage de type PFD, signifiant « Primary Flight Display ». Les nouvelles symbologies, objet de l'invention permettent de distinguer instantanément si un aéronef intrus se rapproche ou s'éloigne. L'écran d'affichage 606 peut être un écran à tube cathodique de type CRT, un écran à cristaux liquides de type LCD ou tout autre type d'écran. L'écran d'affichage est généralement un écran de planche de bord. Mais, l'affichage n'est pas limité à ce seul type d'écran. Ainsi, l'écran d'affichage 606 peut être la source d'images d'un viseur tête haute, connu sous l'acronyme anglo-saxon de HUD signifiant « Head-Up Display » ou faire partie d'une optique de visualisation de casque ou de jumelles à vision nocturne dite JVN. Il est également possible que l'écran d'affichage fasse partie d'un système de projection sur pare-brise.

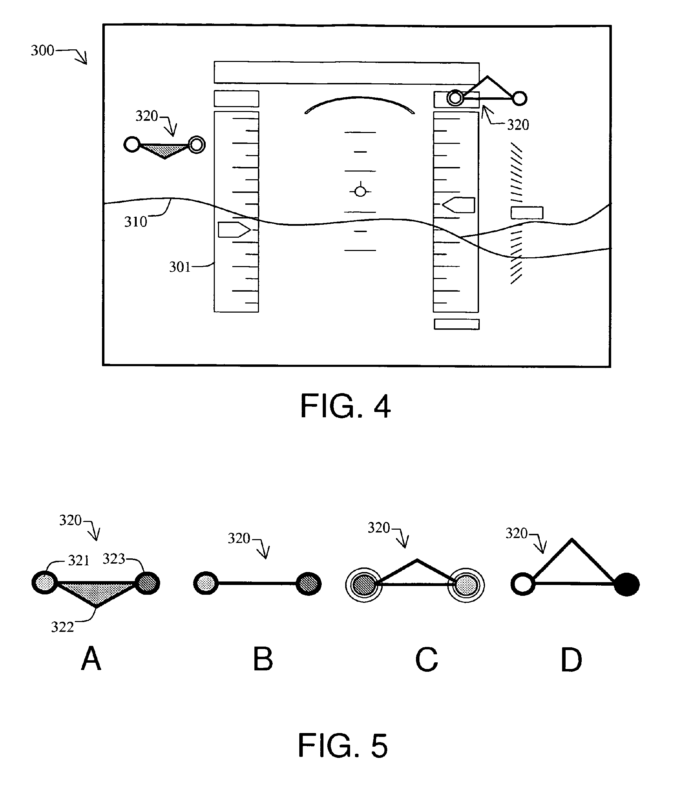

La figure 4 présente les aéronefs intrus dans une vue synthétique conforme 3D. Ces intrus sont présentés dans le secteur frontal de l'avion. L'image 300 est utilisée pour afficher la vue graphique qui représente le monde réel situé hors de l'aéronef couplée avec une symbologie 301 de type Primary Flight Display (PFD). Elle contient une représentation du terrain 310 en vue tridimensionnelle ou 3D, à savoir les montagnes, le relief,....

Deux intrus 320 sont représentés dans le champ de vision frontal. Un jeu sur la transparence est effectué afin de ne pas interférer avec la lecture de la symbologie classique du PFD : elle peut être fixée par exemple à 50%. La couleur par défaut est le blanc-gris utilisé pour le tracé de la symbologie classique. Cette couleur peut être toute autre en respectant les normes aéronautiques.

La vue en perspective peut être aussi bien égocentrique, c'est-à-dire vue de la position courante de l'aéronef ou exocentrique, c'est-à-dire vue à partir d'un point autre que la position courante de l'aéronef. L'utilisateur peut choisir entre ces deux modes de représentation à travers le panneau de commande 601.

Seuls les intrus présents entre l'aéronef et une certaine durée sélectionnée soit par le pilote, soit automatiquement par le calculateur sont représentés. Cette durée est calculée à partir de la distance des intrus et de leur vitesse de rapprochement. La durée minimum réglée par le pilote ne pourra pas être inférieure à 30 secondes.

A titres d'exemples non limitatifs, la figure 5 représente quatre configurations possibles du symbole 320 notées A, B, C et D. Le symbole 320 se compose de trois parties principales :
■ un vecteur horizontal et un quatrième symbole type de trajectoire en forme de V ou de V inversé, l'ensemble formant un triangle isocèle 322 ;
■ deux symboles qui matérialisent les lampes 321 et 323 au bout des ailes de l'aéronef.

Les symboles 321 et 323 sont représentés par des cercles. Quand l'intrus arrive de face en rapprochement, la lampe 321 est de couleur verte et la lampe 323 est de couleur rouge (configuration A et B de la figure 5 où les couleurs sont remplacées par des teintes de gris). Dans les autres cas (configuration C de la figure 5), intrus circulant dans le même sens que l'avion, la lampe 321 est de couleur rouge et la lampe 323 est de couleur verte. Ce choix de couleur s'applique conformément aux règles internationales de l'OACI (Organisation de l'Aviation Civile International) et s'applique aussi aux navires.

Le symbole 322 indique que l'intrus monte ou descend par rapport à l'avion. Ce symbole 322 est représenté par un triangle de hauteur variable mais peut tout aussi bien l'être par une flèche. Quand l'intrus est en pallier, ce symbole 322 se confond avec un segment de droite comme indiqué sur la configuration B de la figure 5. Les deux faces du triangle ont un attribut de présentation différent soit par la couleur, soit par la texture selon l'indication de montée ou de descente. Ainsi, le triangle gris de la configuration A représente un aéronef en descente et les triangles blancs des configurations C et D représentent un aéronef en montée. Le triangle de la configuration D a une hauteur plus importante que celle du triangle de la configuration C parce que la vitesse ascensionnelle de l'aéronef qu'il représente est plus importante.

Dans le cas où l'écran de visualisation est monochrome, la lampe de couleur verte est remplacée par un cercle plein et la lampe de couleur rouge par un cercle vide comme indiqué sur la configuration D de la figure 5. On peut utiliser également des textures différentes.

On note aussi, que lorsqu'un intrus se situe environ à 30 secondes en rapprochement, les deux symboles 321 et 323 se mettent à clignoter alternativement avec une période de l'ordre de deux secondes comme indiqué sur la configuration C où le clignotement est figuré par des cercles minces concentriques. Cela permet d'attirer l'attention du pilote sur des intrus proches.

Tous les intrus sont tracés de manière conforme, liés au paysage sur l'écran de visualisation. On notera que la largeur des intrus est fixe et ne dépend pas de la distance. Elle est choisie en fonction des règles de l'art ergonomique pour assurer une bonne lisibilité de jour comme de nuit.

## Revendications

1. Système de visualisation de type à vision synthétique SVS (600), pour un premier aéronef, ledit système comprenant au moins une base de données cartographiques d'un terrain (604), des capteurs de position dudit aéronef (603), un système de détection du trafic aérien (605) calculant la position et la dangerosité d'au moins un second aéronef présentant un risque de collision avec ledit premier aéronef à partir de données issues de capteurs de reconnaissance, un calculateur électronique (602), un moyen d'interface homme-machine (601) et un écran d'affichage (606), le calculateur comprenant des moyens de traitement des différentes informations issues de la base de données, des capteurs et du moyen d'interface, lesdits moyens de traitement agencés de façon à fournir à l'écran d'affichage une image synthétique du terrain (310) comportant une représentation (320) dudit second aéronef, **caractérisé en ce que** ladite représentation comprend un premier symbole (322) représentant de façon stylisé ledit second aéronef et un second symbole (321, 323), situé à droite du premier symbole lorsque le second aéronef est face au premier aéronef et situé à gauche du premier symbole lorsque le second aéronef est dos au premier aéronef ou inversement.

2. Système de visualisation selon la revendication 1, **caractérisé en ce que** la représentation du second aéronef comporte un troisième symbole (323) différent du premier symbole par sa forme ou par sa couleur et disposé symétriquement du second symbole (321), de façon que lorsque le second symbole est à droite du premier symbole, le troisième symbole est à gauche du premier symbole et inversement.

3. Système de visualisation selon la revendication 2, **caractérisé en ce que** le premier symbole (322) comporte un segment horizontal et un quatrième symbole représentatif de la trajectoire du second aéronef.

4. Système de visualisation selon la revendication 3, **caractérisé en ce que** le premier symbole (322) est un triangle isocèle à base horizontale et le second (321) et troisième symbole (323) sont des cercles de couleur différente ou de texture différente, disposés aux deux extrémités de la base dudit triangle.

5. Système de visualisation selon la revendication 4, **caractérisé en ce que**, lorsque le second aéronef descend, alors la pointe du triangle est dirigée vers le bas et lorsque le second aéronef monte, alors la pointe du triangle est dirigée vers le haut.

6. Système de visualisation selon la revendication 4, **caractérisé en ce que**, lorsque le second aéronef descend, alors le triangle a une première texture ou une première couleur et lorsque le second aéronef monte, alors le triangle a une seconde texture différente de la première texture ou une seconde couleur différente de la première couleur.

7. Système de visualisation selon la revendication 4, **caractérisé en ce que** la hauteur du triangle est proportionnelle à la vitesse de montée ou de descente du second aéronef, le triangle se réduisant à un simple segment lorsque le second aéronef est en pallier.

8. Système de visualisation selon la revendication 4, **caractérisé en ce que** le second symbole est de couleur rouge et le troisième symbole de couleur verte représentatifs des feux de position du second aéronef.

9. Système de visualisation selon la revendication 4, **caractérisé en ce que**, lorsque le second aéronef est à une distance du premier aéronef inférieure à une distance de sécurité, les second et troisième symboles clignotent.

10. Système de visualisation selon la revendication 4, **caractérisé en ce que** le premier, second et troisième symbole sont représentés en vue conforme, c'est-à-dire à l'emplacement qu'ils occupent dans le paysage réel.

11. Système de visualisation selon la revendication 4, **caractérisé en ce que** le premier, second et troisième symbole ont une taille fixe sur l'écran d'affichage.

## Claims

1. A display system of the SVS synthetic vision type (600) for a first aircraft, said system comprising at least one cartographic database of a terrain (604), positioning sensors for said aircraft (603), a system for detecting air-traffic (605), which calculates the position and the danger of at least one second aircraft presenting a collision risk with said first aircraft on the basis of data originating from recognition sensors, an electronic computer (602), a man-machine interface (601) and a display screen (606), said computer comprising means for processing the various items of information originating from the database, the sensors and the interface means, said processing means being arranged so as to provide the display screen with a synthetic image of the terrain (31 0), which comprises a representation (320) of said second aircraft, **characterised in that** said representation comprises a first symbol (322) representing said second aircraft in a stylised manner and a second symbol (321) located to the right of the first symbol when said second aircraft is opposite said first aircraft and located to the left of the first symbol when said second aircraft is facing away form said first aircraft or vice-versa.

2. The display system according to claim 1, **characterised in that** the representation of the second aircraft comprises a third symbol (323), the shape or colour of which differs from the first symbol and which is arranged symmetrically to the second symbol (321), so that when the second symbol is to the right of the first symbol, the third symbol is to the left of the first symbol and vice-versa.

3. The display system according to claim 2, **characterised in that** the first symbol (322) comprises a horizontal segment and a fourth symbol representing the trajectory of the second aircraft.

4. The display system according to claim 3, **characterised in that** the first symbol (322) is an isosceles triangle with a horizontal base and the second (321) and third (323) symbols are circles of different colour or texture, arranged at both ends of the base of said triangle.

5. The display system according to claim 4, **characterised in that**, when the second aircraft descends, the tip of the triangle is directed downwards and when the second aircraft climbs, then the tip of the triangle is directed upwards.

6. The display system according to claim 4, **characterised in that**, when the second aircraft descends, the triangle has a first texture or a first colour and when the second aircraft climb, then the triangle has a second texture different from the first texture or a second colour different from the first colour.

7. The display system according to claim 4, **characterised in that** the height of the triangle is proportional to the climbing or descending speed of the second aircraft, said triangle being reduced to a single segment when the second aircraft is holding level.

8. The display system according to claim 4, **characterised in that** the second symbol is red and the third symbol is green, representing the position lights of the second aircraft.

9. The display system according to claim 4, **characterised in that**, when the distance between the second aircraft and the first aircraft is less than a safe distance, the second and third symbols flash.

10. The display system according to claim 4, **characterised in that** the first, second and third symbols are shown in conformal view, that is in the location that they occupy on the actual landscape.

11. The display system according to claim 4, **characterised in that** the size of the first, second and third symbol on the display screen is fixed.

## Patentansprüche

1. Anzeigesystem des SVS-(Synthetic Vision System)-Typs (600) für ein erstes Luftfahrzeug, wobei das System Folgendes umfasst: wenigstens eine kartografische Datenbank eines Geländes (604), Positionssensoren für das Luftfahrzeug (603), ein System zum Erkennen von Flugverkehr (605), das die Position und die Gefahr von wenigstens einem zweiten Luftfahrzeug, das ein Kollisionsrisiko für das erste Luftfahrzeug darstellt, auf der Basis von Daten von Erkennungssensoren berechnet, einen elektronischen Rechner (602), eine Mensch-Maschine-Schnittstelle (601) und einen Anzeigeschirm (606), wobei der Rechner Mittel zum Verarbeiten der verschiedenen von der Datenbank, den Sensoren und dem Schnittstellenmittel kommenden Daten umfasst, wobei das Verarbeitungsmittel die Aufgabe hat, ein synthetisches Bild des Geländes (310) zum Anzeigeschirm zu senden, das eine Darstellung (320) des zweiten Luftfahrzeugs umfasst, **dadurch gekennzeichnet, dass** die Darstellung ein erstes Symbol (322), das das zweite Luftfahrzeug auf stylisierte Weise darstellt, und ein zweites Symbol (321) umfasst, das sich rechts von dem ersten Symbol befindet, wenn das zweite Luftfahrzeug dem ersten Luftfahrzeug zugewandt ist, und sich links von dem ersten Symbol befindet, wenn das zweite Luftfahrzeug dem ersten Luftfahrzeug ab gewandt ist, oder umgekehrt.

2. Anzeigesystem nach Anspruch 1, **dadurch gekennzeichnet, dass** die Darstellung des zweiten Luftfahrzeugs ein drittes Symbol (323) umfasst, dessen Form oder Farbe sich vom ersten Symbol unterscheidet und das symmetrisch zum zweiten Symbol (321) angeordnet ist, so dass, wenn sich das zweite Symbol rechts vom ersten Symbol befindet, das dritte Symbol links vom ersten Symbol ist und umgekehrt.

3. Anzeigesystem nach Anspruch 2, **dadurch gekennzeichnet, dass** das erste Symbol (322) ein horizontales Segment und ein viertes Symbol hat, das die Flugbahn des zweiten Luftfahrzeugs darstellt.

4. Anzeigesystem nach Anspruch 3, **dadurch gekennzeichnet, dass** das erste Symbol (322) ein gleichschenkliges Dreieck mit einer horizontalen Basis ist und das zweite (321) und das dritte Symbol (323) Kreise von unterschiedlicher Farbe oder Textur sind, die sich an beiden Enden der Basis des Dreiecks befinden.

5. Anzeigesystem nach Anspruch 4, **dadurch gekennzeichnet, dass**, wenn das zweite Luftfahrzeug im Sinkflug ist, die Spitze des Dreiecks abwärts gerichtet ist, und wenn das zweite Luftfahrzeug im Steigflug ist, die Spitze des Dreiecks aufwärts gerichtet ist.

6. Anzeigesystem nach Anspruch 4, **dadurch gekennzeichnet, dass**, wenn das zweite Luftfahrzeug im Sinkflug ist, das Dreieck eine erste Textur oder eine erste Farbe hat, und wenn das zweite Luftfahrzeug im Steigflug ist, das Dreieck eine zweite Textur, die sich von der ersten Textur unterscheidet, oder eine zweite Farbe hat, die sich von der ersten Farbe unterscheidet.

7. Anzeigesystem nach Anspruch 4, **dadurch gekennzeichnet, dass** die Höhe des Dreiecks proportional zur Geschwindigkeit des Steig- oder Sinkflug des zweiten Luftfahrzeugs ist, wobei das Dreieck auf ein einfaches Segment reduziert wird, wenn das zweite Luftfahrzeug im Horizontalflug ist.

8. Anzeigesystem nach Anspruch 4, **dadurch gekennzeichnet, dass** das zweite Symbol rot und das dritte Symbol grün ist, was die Positionslichter des zweiten Luftfahrzeugs repräsentiert.

9. Anzeigesystem nach Anspruch 4, **dadurch gekennzeichnet, dass** das zweite und dritte Symbol blinken, wenn die Distanz zwischen dem zweiten Luftfahrzeug und dem ersten Luftfahrzeug geringer als eine sichere Distanz ist.

10. Anzeigesystem nach Anspruch 4, **dadurch gekennzeichnet, dass** das erste, zweite und dritte Symbol realitätsgerecht, das heißt an dem Ort, den sie in der tatsächlichen Landschaft einnehmen, angezeigt werden.

11. Anzeigesystem nach Anspruch 4, **dadurch gekennzeichnet, dass** die Größe des ersten, zweiten und dritten Symbols auf dem Anzeigeschirm fest ist.
